(19) **Europäisches Patentamt**
**European Patent Office**
**Office européen des brevets**

(11) **EP 3 882 487 B1**

(12) **EUROPÄISCHE PATENTSCHRIFT**

(45) Veröffentlichungstag und Bekanntmachung des Hinweises auf die Patenterteilung:
**29.05.2024 Patentblatt 2024/22**

(21) Anmeldenummer: **21161477.1**

(22) Anmeldetag: **09.03.2021**

(51) Internationale Patentklassifikation (IPC):
$F16H\ 47/02^{(2006.01)}$   $F16H\ 61/04^{(2006.01)}$
$F16H\ 61/42^{(2010.01)}$   $F16H\ 61/47^{(2010.01)}$
$F16H\ 61/472^{(2010.01)}$   $F16H\ 61/688^{(2006.01)}$
$F16H\ 59/14^{(2006.01)}$   $F16H\ 59/46^{(2006.01)}$
$F16H\ 59/68^{(2006.01)}$

(52) Gemeinsame Patentklassifikation (CPC):
**F16H 47/02; F16H 61/0437; F16H 61/42;**
**F16H 61/47; F16H 61/472; F16H 61/688;**
F16H 2059/148; F16H 2059/465; F16H 2059/6892;
F16H 2061/0429; F16H 2061/0462

(54) **VERFAHREN ZUM SCHALTEN EINES VERBUNDGETRIEBES**

GEAR CHANGE METHOD FOR A COMPOUND TRANSMISSION

PROCÉDÉ DE COMMANDE D'UNE TRANSMISSION COMPOSITE

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorität: **16.03.2020 DE 102020203337**

(43) Veröffentlichungstag der Anmeldung:
**22.09.2021 Patentblatt 2021/38**

(73) Patentinhaber: **Robert Bosch GmbH**
**70442 Stuttgart (DE)**

(72) Erfinder:
• **Mutschler, Steffen**
**89233 Neu-Ulm (DE)**
• **Xiang, Yusheng**
**89077 Ulm (DE)**
• **Li, Ruoyu**
**76131 Karlsruhe (DE)**
• **Brach, Christine**
**89233 Neu-Ulm (DE)**
• **Brix, Norman**
**89340 Leipheim (DE)**
• **Lenzgeiger, Ulrich**
**86424 Dinkelscherben (DE)**

(56) Entgegenhaltungen:
**DE-A1- 4 340 126   DE-A1- 10 308 689**
**DE-C2- 3 807 599**

**Beschreibung**

Die Erfindung betrifft ein Verfahren zum Schalten eines Verbundgetriebes, das ein Fahren eines Fahrzeugs in mehreren Fahrbereichen ermöglicht und in dem ein mechanisches Lastschaltgetriebe mit zwei Kupplungen und zwei Gangstufen kombiniert ist mit einem hydrostatischen Getriebe, das eine in ihrem Hubvolumen verstellbare Hydropumpe und einen Hydromotor umfasst, der mit der Hydropumpe in einem geschlossenen hydraulischen Kreislauf angeordnet und mit seiner Triebwelle mit der Primärseite der Kupplungen verbunden ist. Bei einem Wechsel von einem Fahrbereich in den anderen Fahrbereich werden die Primärseite und die Sekundärseite der einen Kupplung voneinander gelöst und die Primärseite und die Sekundärseite der anderen Kupplung kraftschlüssig miteinander gekoppelt. Das Verbundgetriebe wird gemäß einem in einem elektronischen Steuergerät gespeicherten Steueralgorithmus gesteuert.

Die Kombination eines hydrostatischen Getriebes mit einer Hydropumpe und mit einem Hydromotor, die miteinander in einem geschlossenen hydraulischen Kreislauf angeordnet sind, mit einem mechanischen Getriebe bringt eine hohe Systemeffizienz und eine breite Nutzbarkeit von mobilen Arbeitsmaschine mit sich. Als mögliche mechanische Getriebe seien hier synchronisierte Getriebe mit zwei oder mehr Getriebestufen, Summationsgetriebe, die zwei oder mehr Getriebestufen aufweisen und die Fahrbereiche haben, in denen verschiedene Anzahlen von Hydromotoren, zum Beispiel ein erster Hydromotor im einem ersten Fahrbereich und zusätzlich zum ersten Hydromotor ein zweiter Hydromotor in einem zweiten Fahrbereich, mit dem Getriebeausgang verbunden sind, und Lastschaltgetriebe. Mit einem Fahrgetriebe der skizzierten Art kann der Fahrantrieb einer mobilen Arbeitsmaschine so konzipiert sein, dass eine momentenbasierte Steuerung oder eine geschwindigkeitsbasierte Steuerung möglich ist.

Bei Getrieben mit einer Synchronisiereinrichtung kann eine Unterbrechung der Zugkraft während eines Schaltvorgangs nicht vermieden werden. Bei einem Summationsgetriebe wird ein zusätzlicher Hydromotor benötigt, der die Systemkosten erhöht.

Verbundgetriebe, in dem ein mechanisches Lastschaltgetriebe mit zwei Kupplungen und zwei Gangstufen kombiniert ist mit einem hydrostatischen Getriebe kombiniert ist sind zum Beispiel aus der DE 31 28 108 C2, der DE 2 237 595 B oder der DE 38 07 599 C2 bekannt. Wegen der zwei Kupplungen werden derartige Getriebe auch Doppelkupplungsgetriebe genannt. Gemäß den beiden zuletzt genannten Druckschriften umfasst das hydrostatische Getriebe eine in ihrem Hubvolumen verstellbare Hydropumpe und einen in seinem Hubvolumen verstellbaren Hydromotor, der mit der Hydropumpe in einem geschlossenen hydraulischen Kreislauf angeordnet und mit seiner Triebwelle mit der Primärseite der Kupplungen verbunden ist. In der DE 31 28 108 ist ein nicht näher beschriebener Hydromotor ebenfalls mit seiner Triebwelle mit der Primärseite der Kupplungen verbunden. In der Verbindung von der Triebwelle des Hydromotors zur Primärseite der einen Kupplung ist noch eine Zahnradstufe angeordnet.

Bei den mechanischen Lastschaltgetriebe gemäß der DE 2 237 595 B und gemäß der DE 31 28 108 C2 wird ein Wechsel der Gangstufe manuell ausgelöst und rein hydraulisch gesteuert, während gemäß der DE 38 07 599 C2 ein elektronisches Steuergerät vorhanden ist, dem die Signale eines Drehzahlgebers, von dem die Drehzahl der Hydropumpe erfasst wird, eines Stellungsgebers für ein Gaspedal, der dann ein Signal abgibt, wenn das Gaspedal in den Bereich der Vollgasstellung verstellt wird, eines Vorwahlelements für die Vorwahl eines ersten Ganges und eines zweiten Ganges und eines Vorwahlelements für Vorwärtsfahrt und für Rückwärtsfahrt zugeführt werden. Das elektronische Steuergerät ist über elektrische Signalleitungen mit einer elektrohydraulischen Verstelleinrichtung der Hydropumpe sowie mit Betätigungseinrichtungen der beiden Kupplungen verbunden. Die hydraulische Verstelleinrichtung des Hydromotors ist mit der Verstelleinrichtung der Hydropumpe hydraulisch so verschaltet, dass das Schluckvolumen des Hydromotors maximal ist, wenn das Hubvolumen der Hydropumpe minimal ist, und minimal ist, wenn die Hydropumpe maximal eingestellt ist.

In neueren Verbundgetrieben der vorbezeichneten Art erfolgt die Verstellung des Hubvolumens des Hydromotors genauso wie die Verstellung des Hubvolumens der Hydropumpe direkt über elektrische Signale an die Verstelleinrichtung des Hydromotors.

Mit Doppelkupplungsgetrieben kann Schaltvorgang zwischen den beiden Gangstufen ohne Zugkraftunterbrechung ablaufen.

DE 43 40 126 A1 betrifft eine elektro-hydraulische Steuerung für lastschaltbare Getriebe in Fahrzeugen, bestehend aus mindestens einem stufenlos verstellbaren hydrostatischen Getriebe, mindestens einem elektro-hydraulisch betätigbaren Ventil zur Ansteuerung mindestens einer Schaltkupplung, die im Bereich mindestens eines als Stufengetriebe ausgebildeten Lastschaltgetriebes vorgesehen ist sowie einer Mess- und Regelelektronik, die in Wirkverbindung mit dem Ventil steht.

Der Erfindung liegt die Aufgabe zugrunde, ein Verfahren zum Schalten eines Verbundgetriebes der eingangs beschriebenen Art anzugeben, dass das Fahrverhalten bei einem Gangwechsel verbessert ist, dass insbesondere ein schneller und weicher Schaltvorgang ermöglicht wird.

Diese Aufgabe wird gelöst durch ein Verfahren zum Schalten eines Verbundgetriebes mit den Merkmalen des Anspruchs 1. Die abhängigen Ansprüche betreffen bevorzugte Ausführungsformen.

Die Erfindung fußt auf der Erkenntnis, dass ein weicher und schneller Gangwechsel erreicht wird, wenn gilt, dass die aktuelle Zugkraft während des Schaltvorgangs gleich der gewünschten Zugkraft ist. Diese Gleichheit lässt sich in folgender Gleichung 1 ausdrücken:

$$T_{act} - T_{des} \rightarrow 0$$

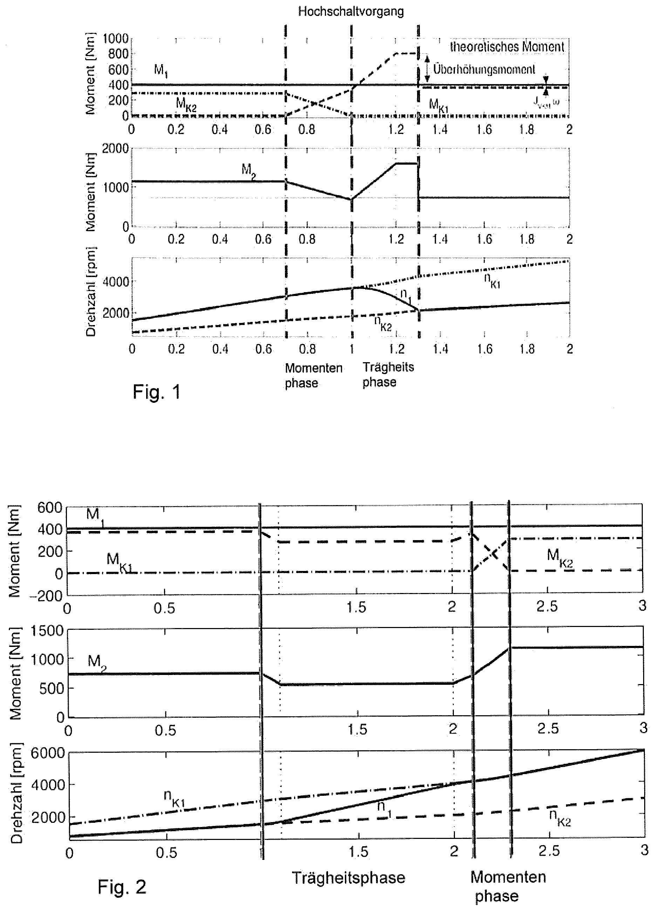

Um die Erfindung gut zu verstehen, seien zunächst anhand der Figuren 1 und 2 noch mal die Schwierigkeiten illustriert, die bei Schaltvorgängen in Doppelkupplungsgetrieben auftreten können. In Figur 1 bedeuten $n_1$ die Drehzahl des ersten Teils, $M_1$ das Moment des ersten Teils, $M_2$ das Moment des zweiten Teils, $M_{K1}$ und $M_{K2}$ sind die Momente an der ersten Kupplung und an der zweiten Kupplung für sich allein. Man erkennt, dass sich mit einer einfachen Steuerungsstrategie die Zugkraft (das Fahrmoment) an den Fahrzeugrädern während eines Schaltvorgangs ändert. In einer ersten Phase (Momentenphase) des Schaltvorgangs dritt ein erster Momentenabfall und am Ende des Schaltvorgangs tritt ein zweiter Momentenabfall auf, die beiden den Fahrkomfort beeinträchtigen. Insbesondere der zweite Momentabfall resultiert in einem den Komfort sehr beeinträchtigenden Ruck des Fahrzeugs.

In Figur 2, die ein Runterschalten von einem höheren Gang in einen niedrigen Gang illustriert, bedeuten $n_1$ die Drehzahl des ersten Teils (des Hydromotors), $M_1$ das Moment des ersten Teils, $M_2$ das Moment des zweiten Teils (der Fahrzeugräder), $M_{K1}$ und $M_{K2}$ sind die Momente an der ersten Kupplung und an der zweiten Kupplung für sich allein. Man erkennt auch hier, dass sich mit einer einfachen Steuerungsstrategie die Zugkraft (das Fahrmoment) an den Fahrzeugrädern während eines Schaltvorgangs ändert. Darüber hinaus bringen die Reibungsverluste während der Trägheitsphase eine kurze Lebensdauer und starke Geräusche mit sich.

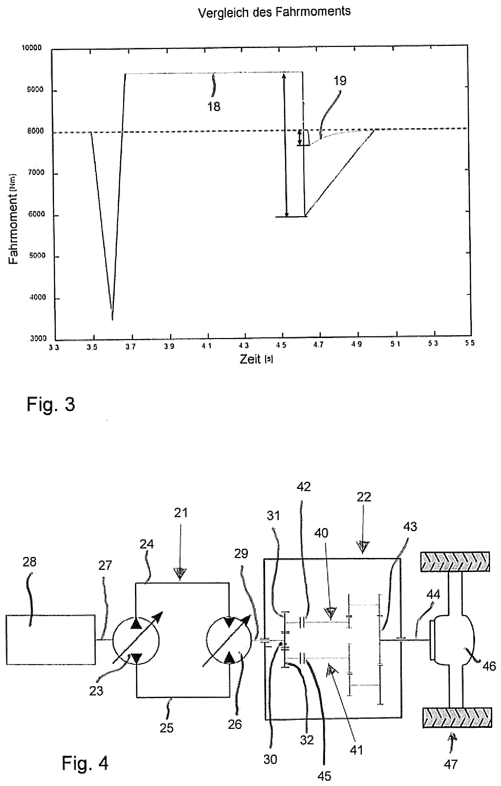

Der wesentliche Vorteil der Erfindung ist darin zu sehen, dass die Schwankung der Zugkraft weitgehend vermieden ist. Während der zweite Momentenabfall stark reduziert ist, ist der erste Momentenabfall gänzlich eliminiert worden. Wie die in Figur 3 dargestellten Ergebnisse von Simulationen für ein Hochschalten zeigen, folgt die reale Zugkraft aufgrund der erfindungsgemäßen Steuerung weitgehend der gewünschten, konstanten Zugkraft. Der Schaltvorgang geht sehr schnell und akzeptabel weich vonstatten. Darüber hinaus sind die Aktuatoren im Modell als Gleichung erster Ordnung, so dass keine hochdynamischen Aktuatoren gefordert sind. Des Weiteren ist der Schlupf in den Kupplungen sehr klein bei einem gewissen Fahrkomfort und bei gewissen Anforderung an das Ausgangsmoment. Außerdem ist die Kalibrierung einfach, da für das Hochschalten nur ein Parameter kalibriert werden muss.

Die Erfindung stellt also eine innovative Strategie zur Verfügung, die das Ausgangsmoment des Hydromotors und gleichzeitig das maximal übertragbare Moment der Kupplungen steuert, um den Fahrkomfort zu verbessern, indem Zugkraftschwankungen während des gesamten Schaltvorgangs weitgehend vermieden werden.

Lösungen nach dem Stand der Technik haben ein von der Getriebestufe abhängiges Fahrverhalten. Dies bringt es mit sich, dass die Fahrzeuggeschwindigkeit bei gleicher Stellung des Fahrpedals in verschiedenen Gangstufen nicht dieselbe ist. Das bringt es wiederum mit sich, dass die Differenz zwischen der gewünschten Geschwindigkeit und der aktuellen Geschwindigkeit nach dem Schalten sehr groß sein kann. Somit macht das Fahrzeug einen Ruck. Um diesen Ruck zu vermeiden, sind die Werte einer Reihe von Parametern festzulegen. Dies erschwert einerseits den Prozess der Kalibration und führt andererseits in vielen Fällen zu einem langsamen Gangwechsel. Zum Beispiel benötigt der Gangwechsel zur Vermeidung des Rucks drei Sekunden, obwohl die theoretisch mögliche kürzeste Zeit für einen Gangwechsel nur 1,0 Sekunden beträgt.

Das erfindungsgemäße Verfahren zum Schalten eines Verbundgetriebes kann in vorteilhafter Weise gemäß den Unteransprüchen weiter ausgestaltet werden.

Ein Getriebe, auf das das erfindungsgemäße Verfahren anwendbar ist, sowie verschiedene Blockschaltbilder und Diagramme, anhand derer das erfindungsgemäße Verfahren verdeutlicht wird, sind in den Zeichnungen dargestellt.

Es zeigen

Figur 1    ein Diagramm mit dem Schaltverhalten eines Verbundgetriebes bei einfacher Steuerung und beim Hochschalten,

Figur 2    ein Diagramm mit dem Schaltverhalten eines Verbundgetriebes bei einfacher Steuerung und beim Runterschalten,

Figur 3    ein Diagramm mit einem Vergleich des Schaltverhaltens beim Hochschalten mit einer einfachen Steuerung und mit einer erfindungsgemäßen Steuerung,

Figur 4    ein Schaltbild eines Verbundgetriebes, das ein hydrostatisches Getriebe und ein mechanisches Doppelkupplungsgetriebe umfasst,

Figur 5    ein vereinfachtes Modell des Doppelkupplungsgetriebes nach Figur 4 einschließlich des Fahrzeugs,

Figur 6    den Aufbau der elektronischen Steuerung für des Doppelkupplungsgetriebe nach Figur 4,

Figur 7    ein Modul der elektronischen Steuerung aus Figur 6 mit mehr Details,

Figur 8    ein weiteres Modul der elektronischen Steuerung aus Figur 5 mit mehr Details,

Figur 9    zwei Diagramme, wobei im oberen Diagramm die Schlupfgeschwindigkeit und im unteren Diagramm die Schlupfbeschleunigung gegen die Zeit aufgetragen sind,

Figur 10    zwei Diagramme, wobei im oberen Diagramm die Schlupfgeschwindigkeit und im unteren Diagramm die Schlupfbeschleunigung während des Runterschaltens gegen die Zeit aufgetragen sind,

Figur 11    die Steuerung für das Moment des Hydromotors,

Figur 12    zwei Diagramme, die sich auf das Hochschalten beziehen, wobei im oberen Diagramm verschiedene Momente des Getriebes und im unteren Diagramm das Moment an den Rädern gegen die Zeit aufgetragen sind, und

Figur 13    drei Diagramme, die sich auf das Hochschalten beziehen und die den zeitlichen Verlauf der Werte verschiedener Variablen während eines Hochschaltvorgangs zeigen.

Auf die Diagramme gemäß den Figuren 1, 2 und 3 ist schon weiter oben eingegangen worden. In Figur 3 zeigen die Linie 18 den Momentenverlauf bei einem herkömmlichen Hochschalten und die Linie 19 den Momentenverlauf bei einem erfindungsgemäßen Hochschalten.

Das Verbundgetriebe 20 gemäß Figur 4 ist innerhalb eines Fahrantriebs für ein Fahrzeug eingesetzt und stellt die Kombination eines hydrostatisches Getriebe 21 und eines mechanischen, als Doppelkupplungsgetriebe ausgebildeten Schaltgetriebes 22 mit zwei Gangstufen dar. Das hydrostatische Getriebe 21 hat eine als Axialkolbenpumpe in Schrägscheibenbauweise ausgestaltete erste Hydromaschine 23, die über eine den einen Kreislaufzweig bildende Arbeitsleitung 24 und eine den anderen Kreislaufzweig bildende Arbeitsleitung 25 fluidisch mit einer als Axialkolbenmotor in Schrägachsenbauweise ausgebildeten zweiten Hydromaschine 26 in einem geschlossenen hydraulischen Kreis verbunden ist. Eine Triebwelle 27 der ersten Hydromaschine ist mit einer Antriebswelle einer als Dieselmotor ausgebildeten Antriebsmaschine 28 gekoppelt. Auf der Triebwelle 29 der zweiten Hydromaschine 26 ist verdrehsicher ein Zahnrad 30 befestigt, das mit zwei gleich großen, bezüglich des Zahnrads 30 einander diametral gegenüberliegend angeordneten Zahnrädern 31 und 32 kämmt. Das Zahnrad 31 bildet den Eingang eines ersten Getriebezweiges 40, das Zahnrad 32 bildet den Eingang eines zweiten Getriebezweiges 41 des Doppelkupplungsgetriebes 22. Im Getriebezweig 40 sind eine erste Reibkupplung 42, deren Primärseite mit dem Zahnrad 31 verbunden ist, und vier weitere Zahnräder angeordnet, die zwei Untersetzungsstufen bilden, wobei ein Zahnrad 43 der zweiten Untersetzungsstufe drehfest auf einer Ausgangswelle 44 des Doppelkupplungsgetriebes 22 sitzt. Im Getriebezweig 41 sind eine zweite Reibkupplung 45, deren Primärseite mit dem Zahnrad 32 verbunden ist, und ebenfalls vier weitere Zahnräder angeordnet, die zwei Untersetzungsstufen bilden, wobei das Zahnrad 43 beiden Getriebezweigen gemeinsam ist. Im Getriebezweig 40 ist die Übersetzung, also das Verhältnis zwischen der Drehzahl des Hydromotors 26 und der Drehzahl der Ausgangswelle 44 größer als im Getriebezweig 41.Die Ausgangswelle 44 des Doppelkupplungsgetriebes 22 ist mit einem Differential 46 einer zweirädrigen Achse 47 gekoppelt. Alternativ kann zwischen dem Doppelkupplungsgetriebe und dem Differential ein weiteres Getriebe angeordnet sein.

Die Schrägscheibe der Hydropumpe 23 und die Zylindertrommel des Hydromotors 26 können stetig auf verschiedene Schwenkwinkel gestellt werden, so dass jede der beiden Hydromaschinen in ihrem Hubvolumen verstellbar ist. Der Schwenkwinkel der Hydropumpe 23 kann dabei über eine Nullstellung der Schrägscheibe hinweg verstellt werden, so dass unter Beibehaltung der Drehrichtung der Hydropumpe 23 eine Drehrichtungsumkehr des nur einseitig verschwenkbaren Hydromotors 26 möglich ist. Beide Hydromaschine 23 und 26 sind dazu geeignet, sowohl als Pumpe als auch als Motor zu betrieben werden. Ihre Bezeichnung als Hydropumpe und Hydromotor drückt aus, in welchen Betriebszustand sie sich hauptsächlich befinden.

Das hydrostatische Getriebe 21 hat einen variablen, kontinuierlich verstellbaren Übersetzungsbereich. Um einen erforderlichen Geschwindigkeitsbereich der mobilen Arbeitsmaschine abdecken zu können, ist dem hydrostatischen Getriebe 21 das Schaltgetriebe 22 mit den zwei Getriebezweigen 40 und 41 und den dadurch realisierten zwei Gang- oder Schaltstufen nachgeschaltet. In einem ersten Gang ist die Reibkupplung 42 geschlossen, während die Reibkupplung 45 geöffnet ist. Beim Schalten in den zweiten Gang werden zeitlich überlappend die Reibkupplung 42 geöffnet und die Reibkupplung 45 geschlossen. Beim Zurückschalten vom zweiten Gang in den ersten Gang ist es umgekehrt.

Gemäß der Erfindung basieren eine Reihe von Überlegungen auf der Steuervariablen $\omega_s$, die den Schlupf zwischen dem Hydromotor und dem Primärteil des Doppelkupplungsgetriebes bezeichnet. Mit Primärteil des Doppelkupplungsgetriebes wird dabei der Teil verstanden, der noch keiner Übersetzung unterworfen ist. Der Primärteil des Doppelkupplungsgetriebes umfasst also auch den Sekundärteil einer Kupplung, so dass $\omega_s$ den Schlupf zwischen dem Primärteil und dem Sekundärteil einer Reibkupplung bezeichnet. Konkret ist $\omega_s$ von Gleichung 1 abgeleitet:

In dem Algorithmus zu berücksichtigen ist auch, dass die Aktuatoren wie die Kupplungen und der Hydromotor das gewünschte Moment nicht sofort bereitstellen können. Deshalb sollten die aktuellen Werte für das Moment im Modell als ein Gleichungssystem erster Ordnung beschrieben werden.

$$\dot{T}_m = \frac{1}{\theta_m} \cdot (T'_m - T_m) \qquad\qquad \omega_s = \omega_m - \omega_p \qquad\qquad (2)$$

$$\dot{T}_c = \frac{1}{\theta_c} \cdot (T'_c - T_c) \qquad\qquad\qquad\qquad\qquad (4)$$

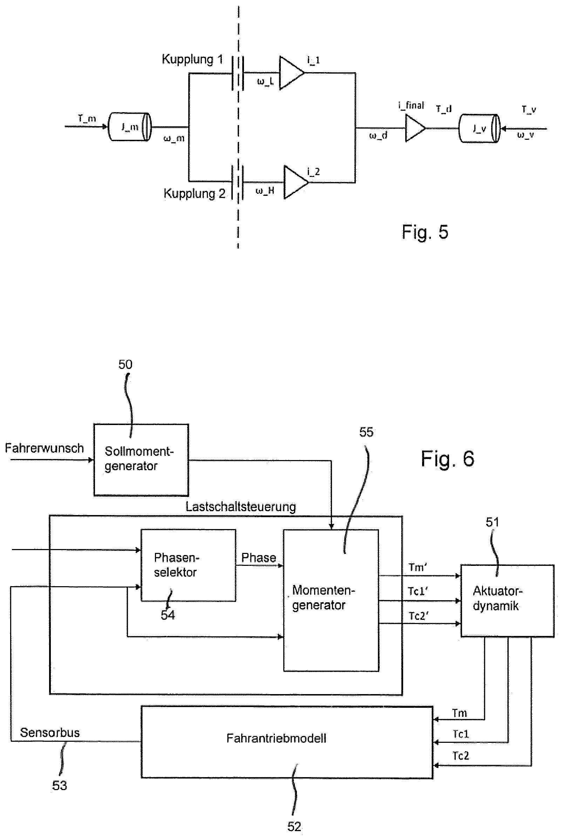

Das Steuerungsschema für diesen Ansatz ist Figur 6 zu entnehmen, wobei der Fahrerwunsch Fahrpedal und Gangauswahl einschließt, das Softwaremodul 50 als Target torque das gewünschte Moment an den Rädern vorgibt, Phase den jeweiligen Arbeitsprozess während eines Schaltvorgangs bezeichnet, $T_m'$ das gewünschte Hydromotormoment, das gleich dem gewünschten Eingangsmoment des Doppelkupplungsgetriebes ist, $T_{c1}'$ und $T_{c2}'$ die gewünschten Kupplungsmomente, $T_m$ das aktuelle Hydromotormoment, das gleich dem aktuellen Eingangsmoment des Doppelkupplungsgetriebes ist, $T_{c1}$ und $T_{c2}$ die aktuellen Kupplungsmomente, die wegen der verzögerten Reaktion von Hydromotor und Kupplungen von den augenblicklich gewünschten Momenten abweichen. Diese werden einem Softwaremodul 51 zugeführt, das die unter Berücksichtigung der Aktuatorendynamik von den gewünschten Momenten abweichenden, aktuellen Momente ausgibt. Diese werden in einem Softwaremodul 52, der ein Modell des Fahrantriebs darstellt, aufbereitet und über einen Sensorbus 53 an einen Phasenselektor 54 und einen Momentengenerator 55 weitergegeben, die die wesentlichen Softwaremodule der elektronischen Steuerung des Lastschaltgetriebes umfassend die Hydrostatic und das Doppelkupplungsgetriebe sind.

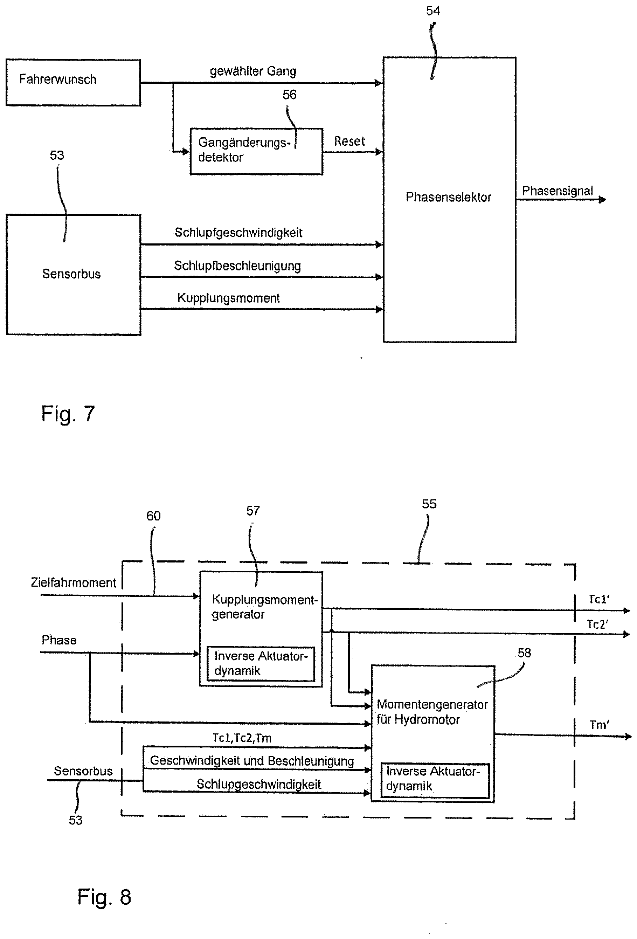

Zunächst sei anhand von Figur 7 der Phasenselektor 54 näher beschrieben. Das Fahren kann in zwei wesentliche Phasen eingeteilt werden, nämlich in das dauerhafte Fahren (steady state) im ersten oder zweiten Gang und in einen Schaltvorgang (Transition state), der wiederum in eine Momentenphase (Torque phase) und eine Trägheitsphase (Inertia phase) eingeteilt werden kann, wobei die Trägheitsphase noch einmal in mehrere Unterphasen untergeteilt ist. Beim Hochschalten gibt es eine Unterphase mit einer hohen Beschleunigung des Schlupfes, in eine Unterphase mit einer geringen Beschleunigung des Schlupfes und in eine Unterphase der kraftschüssigen Kopplung. Dabei wird das Kupplungsmoment als Übergangssignal zwischen der Momentenphase und der Trägheitsphase genutzt. Beim Runterschalten gibt es die erste schnelle Unterphase, die erste weiche Unterphase, die zweite schnelle Unterphase und die zweite weiche Unterphase. Cross-Shift, während dessen die eine Kupplung geöffnet wird und gleichzeitig die andere Kupplung geschlossen wird, geschieht hier während der zweiten schnellen Unterphase. In manchen Fällen kann das Cross-Shift in der zweiten schnellen Unterphase nicht beendet werden und reicht bis in die zweite weiche Unterphase. Das beeinflusst die Steuerungsstrategie jedoch nicht weiter.

Dem Phasenselektor 54 wird der ausgewählte Gang sowie das Rücksetzsignal eines Detektors 56 für eine Änderung in der Wahl des Ganges zugeführt. Außerdem werden dem Phasenselektor 54 über den Sensorbus 53 die Schlupfgeschwindigkeit, die Schlupfbeschleunigung und das Kupplungsmoment zugeführt. Das Ausgangssignal des Phasenselektors 54 ist ein Phasensignal für die Phase beziehungsweise Unterphase, in der sich das Getriebe gerade befindet.

Die nachfolgende Tabelle 1 zeigt alle Phasen während eines Hochschaltvorgangs und ihr wesentliches Kennzeichen im Hinblick auf den Schlupf:

Tabelle 1

|  |  | Character | Phase |
|---|---|---|---|
| Stabiler Zustand | Gang1 | $\omega_s = 0$ | 0 |
|  | Gang2 | $\omega_s = 0$ | 5 |
| Schaltvorgang | Momentenphase | $\dot{\omega}_s > 0$ Mit dem Ziel $\omega_s > 0$ | 1 |
|  | Trägheitsphase | $\lvert\dot{\omega}_s\rvert$ groß | 2 |
|  |  | $\lvert\dot{\omega}_s\rvert$ klein | 3 |
|  |  | Kraftschluss | 4 |

Die nachfolgende Tabelle 2 zeigt außer den stabilen Zuständen die Trägheitsphase mit ihren Unterphasen während eines Runterschaltens und ihr wesentliches Kennzeichen im Hinblick auf den Schlupf.

Tabelle 2

| | | | Character | Phase |
|---|---|---|---|---|
| Stabiler Zustand | | Gang1 | $\omega_s = 0$ | 5 |
| | | Gang2 | $\omega_s = 0$ | 6 |
| Schaltvorgang | Trägheitsphase | | $|\dot{\omega}_s|$groß | 0 |
| | | | $|\dot{\omega}_s|$klein | 1 |
| | | | $|\dot{\omega}_s|$groß | 2 |
| | | | $|\dot{\omega}_s|$klein | 3 |
| | | | Kraftschluss | 4 |

Der Momentengenerator 55 sei anhand der Figur 8 näher beschrieben. Das gewünschte Zielmoment und die Phase sind die Basis für die Steuerung des Ausgangsmoments der Kupplungen und des Hydromotors, wobei das Kupplungsmoment das Momentengleichgewicht zwischen der Seite des Hydromotors und der Seite der Ausgangswelle 44 beeinflusst. Deshalb wird auf der Basis des gewünschten Zielmoments zuerst der Steueralgorithmus für das Kupplungsmomentbestimmt und dann das dazu korrespondierende Moment des Hydromotors 26 berechnet. Der Momentengenerator 55 weist Untermodul 57 für das Generieren des Kupplungsmoments und ein Untermodul 58 für das Generieren des Moments des Hydromotors 26 auf, wobei beide Untermodule 57 und 58 jeweils ein inverses Modell der Dynamik des jeweiligen Aktuators (Kupplung bzw. Hydromotor) enthalten. Dem Untermodul 57 werden ein Phasensignal 59 vom Phasenselektor und ein Signal 60 zugeführt, das das Zielfahrmoment repräsentiert. Die Ausgangssignale des Untermoduls 57 sind die Sollmoment Tc1' und Tc2' an den beiden Kupplungen 42 und 45. Diese Ausgangssignale werden den Aktuatoren der beiden Kupplungen und dem Untermodul 58 zugeführt, der unter Berücksichtigung der aktuellen Momente Tc1, Tc2 und Tm an den beiden Kupplungen und am Hydromotor, der Geschwindigkeit und Beschleunigung der Sekundärseiten der Kupplungen sowie der Schlupfgeschwindigkeit das Sollmoment Tm' für den Hydromotor bestimmt und ausgibt.

Dabei ist während des Schaltvorgangs absichtlich Schlupf aufrechterhalten, so dass die Zugkraft nicht von dem Moment des Hydromotors abhängt. Wie schon weiter oben beschrieben wird zunächst das Moment der Kupplungen berechnet, das für das Erreichen der Zielzugkraft notwendig ist. Danach wird das Moment des Hydromotors auf einen Wert eingestellt, mit dem die Kontrollierbarkeit des Fahrmoments und kleine Reibungsverluste erhalten werden. Schließlich geben die Untermodule 57 und 58 die Sollsteuersignale unter Berücksichtigung der Aktuatorendynamik aus, so dass keine hochdynamischen Aktuatoren benötigt werden.

Bei den bekannten Steuerungen für einen Schaltvorgang tritt beim Hochschalten der erste Abfall des Moments in der Momentenphase auf. Um das zu vermeiden wird hier dafür gesorgt, dass der Hydromotor 26 schneller dreht als die Sekundärteile der Kupplungen, so dass das System entkoppelt ist und separat gesteuert werden kann. Am Anfang der Momentenphase gibt es noch keinen Schlupf, $\omega_s$ ist also null. Das konkrete Vorgehen bei der Steuerung kann mit folgenden Gleichung illustriert werden:

$$T_d = T_{c1} \cdot i_1 + T_{c2} \cdot i_2 \qquad\qquad (5)$$

$$T_m = T_{c1} + T_{c2} + J_m \cdot \dot{\omega}_m \qquad\qquad (6)$$

$$\dot{\omega}_m - \dot{\omega}_p = \dot{\omega}_s > 0 \qquad\qquad (7)$$

Die Gleichung 7 ist die notwendig Bedingung dafür, den Steuerungsalgorithmus zu erhalten. Sonst haben die Gleichungen 5 und 6 verschiedene Vorzeichen, was die Steuerung sehr schwierig macht. Gemäß Gleichung 5 kann das von der zweiten Kupplung übertragene Moment $T_{c2}$ auf der Basis von $T_d$ und $T_{c1}$ berechnet werden. Da $T_{c1}$ beim Hochschalten gegen null gehen muss, kann man auch annehmen, das $T_{c2}$ allein von $T_d$ abhängt. Während des Hochschaltens wird $T_{c1}$ mit einer bestimmten, vom Entwickler vorgegebenen Steigung kontinuierlich bis auf null abnehmen. Wenn $T_{c2}$ vorliegt, kann man das Sollmoment des Hydromotors erhalten. Für den Zweck einer robusten Steuereinheit, sollte die Schlupfbeschleunigung so gewählt werden, dass sichergestellt ist, dass der Schlupf $\omega_s$ immer positiv ist. Allerdings führt dies zu zusätzlichen Reibungsverlusten an den Kupplungen. Deshalb sollte der Wert so klein wie möglich sein. Zieht man die Aktuatordynamik mit in Betracht, so ist das Steuersignal für das Moment des Hydromotors durch folgenden Gleichung 8 gegeben.

$$T'_m = T_m + \frac{\theta_m}{\theta_c} \cdot \left( T'_{c1} - T_{c1} \right) + \frac{\theta_m}{\theta_c} \cdot \left( T'_{c2} - T_{c2} \right) + \theta_m \cdot J_m \cdot i_{final} \cdot i_{current} \cdot \ddot{\omega}_v + \ddot{\omega}_{s,set} \cdot \theta_m \cdot J_m \quad (8)$$

Dabei ist $\omega_{s,acc}$ Punkt der Sicherheitswert und $T_m'$ ist das Ausgangssignal des Momentgenerators 55 für den Hydromotor 26.

Um einen positiven und stabilen Leistungsfluss zu haben, dreht der Hydromotor auch beim Runterschalten während des Cross-Shift schneller als die Sekundärteile der Kupplungen beziehungsweise die Primärteile der Getriebestufen des mechanischen Getriebes, so dass das System entkoppelt ist und separat gesteuert werden kann. Diese Bedingung ist beim Runterschalten ohne weiteres erfüllt, so dass hier anders als beim Hochschalten kein spezieller Steueralgorithmus erforderlich ist.

In der Trägheitsphase des Hochschaltvorgangs muss die Drehzahl des Hydromotors entsprechend dem nächsten Gang erniedrigt werden. Dabei tritt ein Schlupf zwischen dem Hydromotor beziehungsweise dem Primärteil der einzurückenden Kupplung und dem Sekundärteil der Kupplung auf. In der Trägheitsphase eines Runterschaltvorgangs muss die Drehzahl des Hydromotors entsprechend dem einzulegenden niedrigeren Gang erhöht werden. In einem ersten Schritt wird der Hydromotor beschleunigt, um schneller zu drehen als der Primärteil der Zielgangstufe beziehungsweise der Sekundärteil der entsprechenden Kupplung. Als Ergebnis davon besteht ein positiver Schlupf zwischen dem Hydromotor und dem Sekundärteil der Kupplung. Somit ist sowohl beim Hochschalten als auch beim Runterschalten das Ausgangsmoment für die Fahrzeugräder weiterhin durch die Kupplungen gesteuert. Allerdings verliert das System zu dem Zeitpunkt, zu dem die zweite Kupplung geschlossen ist, einen Freiheitsgrad und wird von einem System mit zwei Freiheitsgraden zu einem System mit nur noch einem Freiheitsgrad. Das verursacht den zweiten Momentenabfall. Dieser Momentenabfall kann mit folgender Gleichung 9 beschrieben werden:

$$T_d(t^-) - T_d(t^-) = \frac{i_{tar} \cdot i_{final} \cdot \eta}{J_v + J_m \cdot i_{tar}^2 \cdot i_{final}^2 \cdot \eta} \dot{\omega}_{s,tar}(t^-) \cdot J_m \cdot J_v \quad (9)$$

Wobei $T_d(t^+)$ das aktuelle Antriebsmoment nach dem Schließen der zweiten Kupplung, $Td(t)$ das aktuelle Antriebsmoment vor dem Schließen, $i_{final}$ die Übersetzung des finalen Antriebs, $i_{tar}$ die Übersetzung des eingelegten Ganges, $J_m$ das Trägheitsmoment des Hydromotors 26 und $J_v$ das Trägheitsmoment des Fahrzeugs ist.

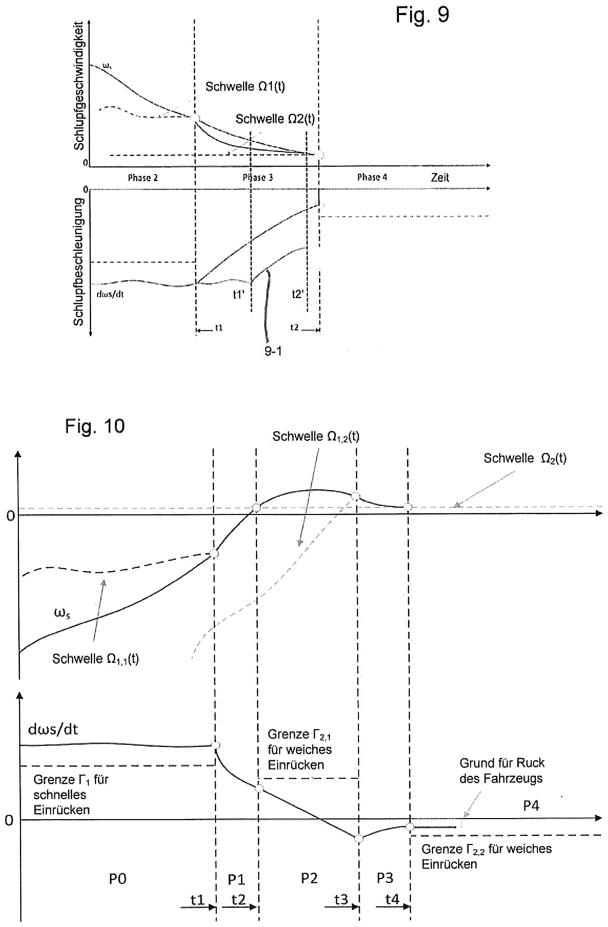

Augenscheinlich sind alle Parameter außer $\omega_s$ Punkt Konstanten, die nach der Herstellung des Fahrzeugs nicht mehr geändert werden können. Somit ist $\omega_s$ Punkt die wesentliche Steuervariable des Algorithmus. Da das Ausgangsmoment an den Fahrzeugrädern durch die Kupplungen gesteuert ist, kann $\omega_s$ Punkt allein durch das Abtriebsmoment des Hydromotors 26 gesteuert werden. Um den Momentenabfall am Ende der Trägheitsphase klein zu halten, wird der Absolutwert der Schlupfbeschleunigung zuerst auf ein hohes Niveau gesetzt, um ein schnelles Schließen zu erhalten. Dann wird die Schlupfbeschleunigung auf kleinere Werte hin gesteuert, um einen guten Fahrkomfort zu haben. Wie aus Figur 9 ersichtlich ist, gibt es eine kritische Dämpfungskurve und, obwohl eine Dämpfungskurve unterhalb der kritischen Dämpfungskurve schneller ist als die kritische Dämpfungskurve, kann das Überschwingen zu einigen anderen Problemen wie Verlängerung der Schaltdauer und Erhöhung der Reibungsverluste führen. Auf der anderen Seite ist eine Dämpfungskurve, die über der kritischen Dämpfungskurve liegt, langsamer als die kritische Dämpfungskurve. Die Linie 9-1 in Figur 9 zeigt das ruppige Verhalten beim Hochschalten, falls der absolute Wert von $\Gamma_2$ größer gemacht wird. Es ist offensichtlich, dass die Schaltdauer auf Kosten des Fahrkomforts verringert werden kann.

Während der Phase 3, in der $\omega_s$ Punkt ($d\omega_s/dt$) klein ist oder klein wird, kann das System mit folgender Gleichung beschrieben werden:

$$\ddot{\omega}_{s,2} + \frac{1}{\theta_m} \cdot \dot{\omega}_{s,2} - \frac{1}{J_m \cdot \theta_m} \cdot T_{e,set} + \frac{1}{J_m \cdot \theta_m} \cdot \left( T_{c1} + J_m \cdot \dot{\omega}_{p,2} + \theta_m \cdot \dot{T}_{c1} + J_m \cdot \theta_m \cdot \ddot{\omega}_{p,2} \right) = 0 \quad (10)$$

Insbesondere für das Runterschalten sind erfindungsgemäß zwei schnelle Unterphasen und zwei weiche Unterphasen der Trägheitsphase ohne Sprünge in dωs/dt vorgesehen. Die erste weiche Unterphase ermöglicht es, das Überschwingen einzustellen und damit die Güte des Runterschaltens. Der Schlupf wird dabei durch den Hydromotor gesteuert und der Schlupf wird durch den Controller für die zweite schnelle und die zweite weiche Unterphase gesteuert. Diese Art der Steuerung ist leicht zu implementieren und benötigt keinen teuren Aktuator.

Aus Figur 10 geht der Verlauf der Schlupfgeschwindigkeit und der Schlupfbeschleunigung während eines Runterschaltens hervor. Durch das Vorsehen von zwei schnellen Unterphasen P0 und P2 und zwei weichen Unterphasen P1 und P 3 in der Trägheitsphase kann eine ruckartige Bewegung des Fahrzeugs weitgehend vermieden werden. In der zweiten schnellen Unterphase P2 wird dωs/dt nicht durch die Kupplungen, sondern durch den Hydromotor gesteuert. Zwischen den Unterphasen P1 und P2 ist kein Sprung in dωs/dt vorhanden. Am Ende der Unterphase P4 ist dωs/dt nur geringfügig kleiner als 0, was in einem allenfalls geringfügigen Ruck bemerkbar ist.

Das System kann in beiden weichen Unterphasen des Runterschaltens mit folgender Gleichung beschrieben werden.

$$\ddot{\omega}_{s,1} + \frac{1}{\theta_m} \cdot \dot{\omega}_{s,1} - \frac{1}{J_m \cdot \theta_m} \cdot T_{e,set} + \frac{1}{J_m \cdot \theta_m} \cdot \left( T_{c1} + J_m \cdot \dot{\omega}_p + \theta_m \cdot \dot{T}_{c1} + J_m \cdot \theta_m \cdot \ddot{\omega}_p \right) = 0 \qquad (6)$$

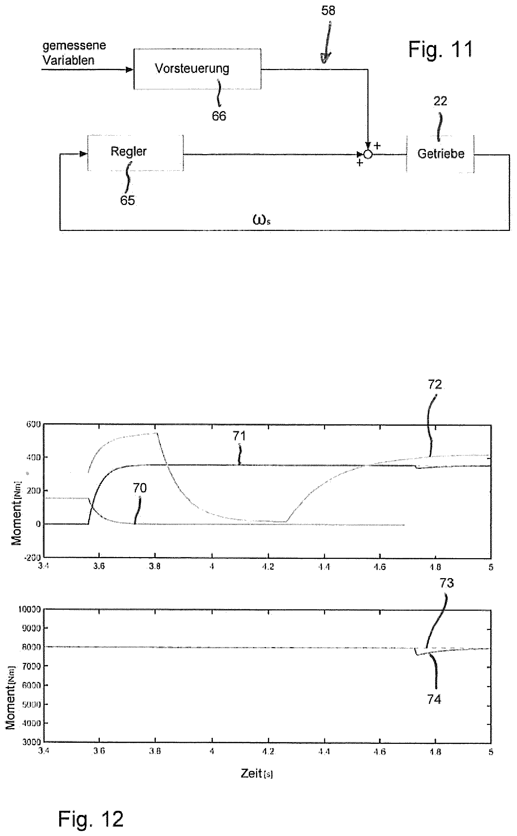

Figur 11 zeigt den näheren Aufbau des Untermoduls 58 des Momentengenerators 55. Ein Regler 65 mit Rückkopplung ist mit einer Vorsteuerung 66 kombiniert. Abhängig von der jeweiligen Phase ist die Software des Reglers 65 unterschiedlich. Das Ausgangssignal des Untermoduls 58 ist die Summe aus dem Signal $u_{ff}$ der Vorsteuerung 66 und dem Ausgangssignal $u_{fb}$ des Reglers 65. Die folgende Gleichung zeigt die der Steuerung gemäß Figur 11 zugrundeliegende Idee.

$$T'_m = u_{ff} + u_{fb} \qquad (9)$$

Die Tabellen 3 und 4 und die Gleichung 11 beziehen sich auf einen Hochschaltvorgang. In der Tabelle 3 sind $\Gamma_2$, $p_m$ und $\Omega_2$ die vordefinierten Parameter für die gewünschte Schlupfbeschleunigung vor dem Schließen, für den Abfallfaktor des Moments des Hydromotors und für die Schlupfgeschwindigkeit für die Entscheidung, jetzt die Kupplung bis zum vollständigen Kraftschluss zu schließen. ΔT aus Tabelle 4 ist die zusätzliche Schließkraft, die garantiert, dass die Kupplung geschlossen ist. Die Steuervariable Ω1(t) ist für den Phasenwechsel genutzt und beschreiben als

$$\Omega_1(t) = \Omega_2 + 2\theta_m \cdot \left[ \Gamma_2 - \dot{\omega}_{s,2}(t) \right] \qquad (11)$$

Tabelle 3: Steuerschema für den Hydromotor in verschiedenen Phasen

| Phase | Bedingungen | Steuerterm |
|---|---|---|
| 2 | $\Omega_1 < \omega_g$ | $u_{ff} = p_m \cdot T_{m,max}$<br>$u_{fb} = 0$ |
| 3 | $\Omega_2 < \omega_s < \Omega_1$ | $u_{ff} = T_{c,2} + J_m \cdot \dot{\omega}_{p,2} + J_m \cdot \theta_m \cdot \ddot{\omega}_{p,2} + \theta_m \cdot \dot{T}_{c2}$<br><br>$u_{fb} = -\left[ \frac{1}{4\theta_m^2} \cdot \left( \omega_{s,2} - \Omega_2 + \frac{\Gamma_2}{\lambda_m} \right) \right] \cdot J_m \cdot \theta_m$ |
| 4 | $\omega_s < \Omega_2$ | $u_{ff} = T_{c2} + J_m \cdot \dot{\omega}_{p,2}$<br>$u_{fb} = 0$ |
| 0 | Gang 1 eingelegt | $u_{ff} = T_{c1} + J_m \cdot \dot{\omega}_{p,1}$<br>$u_{fb} = 0$ |
| 5 | Gang 2 eingelegt | $u_{ff} = T_{c2} + J_\theta \cdot \dot{\omega}_{p,2}$<br>$u_{fb} = 0$ |

(fortgesetzt)

| Phase | Bedingungen | Steuerterm |
|---|---|---|
| 1 | Gangwechsel gefordert && <br><br> $T_{c1} > 0.3$ | $u_{ff} = T_m + \frac{\theta_m}{\theta_c} \cdot (T'_{c1} - T_c) + \frac{\theta_m}{\theta_c} \cdot (T'_{c2} - T_{c2}) + \theta_m \cdot J_m \cdot i_{final}$ <br> $\cdot i_{current} \cdot \ddot{\omega}_v + \ddot{\omega}_{s,set} \cdot \theta_m \cdot J_m$ <br><br> $u_{fb} = 0$ |

Tabelle 4: Steuerschema für den Hydromotor in verschiedenen Phasen

| Phase | Bedingungen | Steuerterm |
|---|---|---|
| 2 | $\Omega_1 < \omega_s$ | $T_{c1}' = 0$ <br> $T_{c2}' = \dfrac{T_{d,d}}{i_2 \cdot i_{final}}$ |
| 3 | $\Omega_2 < \omega_s < \Omega_1$ | $T_{c1}' = 0$ <br> $T_{c2}' = \dfrac{T_{d,d}}{i_2 \cdot i_{final}}$ |
| 4 | $\omega_s < \Omega_2$ | $T_{c1}' = 0$ <br> $T_{c2}' = \dfrac{T_{d,d}}{i_2 \cdot i_{final}} + \Delta T$ |
| 0 | Gang1 eingelegt | $T_{c1}' = \dfrac{T_{d,d}}{i_1 \cdot i_{final}} + \Delta T$ <br> $T_{c2}' = 0$ |
| 5 | Gang 2 eingelegt | $T_{c1}' = 0$ <br> $T_{c2}' = \dfrac{T_{d,d}}{i_2 \cdot i_{final}} + \Delta T$ |
| 1 | Gangwechsel gefordert && $T_{c1} > 0.3$ | $T_{c1}' = 0$ <br> $T_{c2}' = \dfrac{T_{d,d}}{i_2 \cdot i_{final}}$ |

Die Tabellen 5 und 6 und die Gleichungen beziehen sich auf eine Runterschaltvorgang. In der Tabelle 4 sind $\Gamma_{1,2}$, $\Gamma_{2,2}$, pm, ws,acc und $\Omega_2$ vordefinierte Parameter für die gewünschte Schlupfbeschleunigung vor dem Überschwingen, die gewünschte Schlupfbeschleunigung vor dem Einrücken, für den Abfallfaktor für das Moment des Hydromotors, für die gewünschte Änderung der Schlupfbeschleunigung für die zweite schnelle Unterphase P2 und für die Schlupfgeschwindigkeit für die Entscheidung zum kraftschlüssigen Schließen der Kupplung. $\Delta T$ aus Tabelle 5 ist die zusätzliche Schließkraft, die garantiert, dass die Kupplung sicher geschlossen ist. Die Steuervariablen $\Omega_{1,1}(t)$ und $\Omega_{1,2}(t)$ werden für den Phasenwechsel genutzt und sind durch folgende Gleichungen gegeben.

$$\Omega_{1,1}(t) = \Omega_2 + 2\theta_m \cdot \left[ \Gamma_{2,1} - \dot{\omega}_s(t) \right] \tag{7}$$

$$\Omega_{1,2}(t) = \Omega_2 + 2\theta_m \cdot \left[ \Gamma_{2,2} - \dot{\omega}_s(t) \right] \tag{8}$$

Tabelle 5: Steuerschema für den Hydromotor in verschiedenen Phasen

| Phase | Startbedingungen | Steuerterme |
|---|---|---|
| 0 | Runterschalten gefordert | $u_{ff} = p_m \cdot T_{m,max}$ <br> $u_{fb} = 0$ |
| 1 | $\omega_s = \Omega_{1,1}(t)$ | $u_{ff} = T_{c,2} + J_m \cdot \dot{\omega}_{p,1} + J_m \cdot \theta_m \cdot \ddot{\omega}_{p,1} + \theta_m \cdot \dot{T}_{c2}$ <br> $u_{fb} = -\left[\frac{1}{4\theta_m^2} \cdot \left(\omega_{s,1} - \Omega_2 + \frac{\Gamma_{2,1}}{\lambda_m}\right)\right] \cdot J_m \cdot \theta_m$ |
| 2 | $\omega_s = \Omega_2$ | $u_{ff} = T_m + \frac{\theta_m}{\theta_c} \cdot (T'_{c1} - T_{c1}) + \frac{\theta_m}{\theta_c} \cdot (T'_{c2} - T_{c2}) +$ <br> $\theta_m \cdot J_m \cdot i_{final} \cdot i_{current} \cdot \ddot{\omega}_v + \dot{\omega}_{s,acc} \cdot \theta_m \cdot J_m$ <br> $u_{fb} = 0$ |
| 3 | $\omega_s = \Omega_{1,2}(t)$ | $u_{ff} = T_{c,1} + J_m \cdot \dot{\omega}_{p,1} + J_m \cdot \theta_m \cdot \ddot{\omega}_{p,1} + \theta_m \cdot \dot{T}_{c,1}$ <br> $u_{fb} = -\left[\frac{1}{4\theta_m^2} \cdot \left(\omega_{s,1} - \Omega_2 + \frac{\Gamma_{2,2}}{\lambda_m}\right)\right] \cdot J_m \cdot \theta_m$ |
| 4 | $\omega_s = \Omega_2$ | $u_{ff} = T_{c,1} + J_\theta \cdot \dot{\omega}_{p,1}$ <br> $u_{fb} = 0$ |
| 5 | Gang 1 eingelegt | $u_{ff} = T_{c,1} + J_\theta \cdot \dot{\omega}_{p,1}$ <br> $u_{fb} = 0$ |
| 6 | Gang 2 eingelegt | $u_{ff} = T_{c,2} + J_\theta \cdot \dot{\omega}_{p,2}$ <br> $u_{fb} = 0$ |

Tabelle 6: Steuerschema für den Hydromotor in verschiedenen Phasen

| Phase | Startbedingungen | Steuerterme |
|---|---|---|
| 0 | Runterschalten gefordert | $T_{c1}' = 0$ <br> $T_{c2}' = \frac{T_{d,d}}{i_2 \cdot i_{final}}$ |
| 1 | $\omega_s = \Omega_{1,1}(t)$ | $T_{c1}' = 0$ <br> $T_{c2}' = \frac{T_{d,d}}{i_2 \cdot i_{final}}$ |
| 2 | $\omega_s = \Omega_2$ | $T_{c1}' = \frac{T_{d,d}}{i_1 \cdot i_{final}}$ $T_{c2}' = 0$ |
| 3 | $\omega_s = \Omega_{1,2}(t)$ | $T_{c1}' = \frac{T_{d,d}}{i_1 \cdot i_{final}}$ $T_{c2}' = 0$ |

(fortgesetzt)

| Phase | Startbedingungen | Steuerterme |
|---|---|---|
| 4 | $\omega_s = \Omega_2$ | $T_{c1}' = \dfrac{T_{d,d}}{i_1 \cdot i_{final}} + \Delta T \qquad T_{c2}' = 0$ |
| 5 | Gang 1 eingelegt | $T_{c1}' = \dfrac{T_{d,d}}{i_1 \cdot i_{final}} + \Delta T \qquad T_{c2}' = 0$ |
| 6 | Gang 2 <u>eingelegt</u> | $T_{c1}' = 0$ <br> $T_{c2}' = \dfrac{T_{d,d}}{i_2 \cdot i_{final}} + \Delta T$ |

Wie in Figur 12 gezeigt, steuert während des gesamten Hochschaltvorgangs das übertragbare Kupplungsmoment das Radmoment während des gesamten Schaltvorgangs, während der Hydromotor für kleine Reibungsverluste, für einen positiven Leistungsfluss und für ein schnelles und weiches Schließen der Kupplung sorgt. In Figur 12 entspricht die Linie 70 dem Moment an der zu lösenden Kupplung, die Linie 71 das Moment an der zu schließenden Kupplung, die Linie 72 das Moment des Hydromotors, die Linie 73 das gewünschte Fahrmoment und die Linie 74 das tatsächliche Fahrmoment. Man erkannt, dass der erste Abfall des Fahrmoments gänzlich verschwunden und der zweite Abfall des Fahrmoments äußerst gering ist.

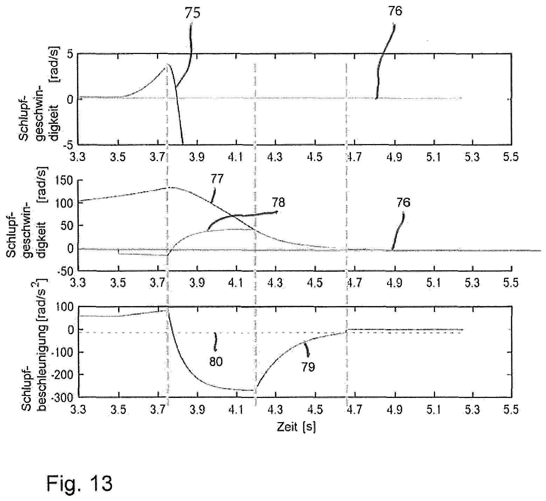

Die Figur 13 zeigt, wie sich die Variablen während des Hochschaltvorgangs ändern, wobei $\omega_{s,1}$ die Schlupfgeschwindigkeit zwischen dem Hydromotor und dem Sekundärteil der zu lösenden Kupplung und $\omega_{s,2}$ die Schlupfgeschwindigkeit zwischen dem Hydromotor und dem Sekundärteil der zu schließenden Kupplung bedeutet. Die Steuervariablen aus Tabelle 3 basieren auf der Annahme, dass beiden Kupplungen das gleiche dynamische Verhalten haben. Falls die beiden Kupplungen verschiedene Zeitkonstanten haben, werden die Steuervariablen für das Hochschalten während der Momentenphase wie folgt berechnet:

$$\dot{T}_{d,d} = \left( \frac{i_1}{\theta_{c1}} \cdot \left( T_{c1}' - T_{c1} \right) + \frac{i_2}{\theta_{c2}} \cdot \left( T_{c2}' - T_{c2} \right) \right) \cdot i_{final} \qquad (12)$$

$$T_{c1}' = T_{c1} + \dot{T}_{d,d} \cdot \frac{\theta_{c1}}{i_{final} \cdot i_1} - \frac{i_2 \cdot \theta_{c1}}{i_1 \cdot \theta_{c2}} \left( T_{c2}' - T_{c2} \right) \qquad (13)$$

$$T_{c2}' = \frac{T_{d,d}}{i_{final} \cdot i_2} \qquad (14)$$

In Figur 13 zeigen die Linie 75 den Verlauf von $\omega_s$,1, die Linie 76 den Verlauf von $\Omega_2$, die Linie 77 den Verlauf von $\omega_{s,2}$, die Linie 78 den Verlauf von $\Omega_1$, die Linie 79 den Verlauf von $\omega_{s,2}$ Punkt und die Linie 80 den Verlauf von $\Gamma_2$.

Bezugszeichenliste

20 Verbundgetriebe
21 hydrostatisches Getriebe
22 Doppelkupplungsgetriebe
23 Hydropumpe
24 Arbeitsleitung
25 Arbeitsleitung

| 26 | Hydromotor |
|----|------------|
| 27 | Triebwelle von 23 |
| 28 | Dieselmotor |
| 29 | Triebwelle von 26 |
| 30 | Zahnrad |
| 31 | Zahnrad |
| 32 | Zahnrad |
| 40 | erster Getriebzweig |
| 41 | zweiter Getriebzweig |
| 42 | erste Reibkupplung in 40 |
| 43 | Zahnrad |
| 44 | Ausgangswelle von 22 |
| 45 | zweite Reibkupplung |
| 46 | Differential |
| 47 | zweirädrigen Achse |
| 50 | Softwaremodul |
| 51 | Softwaremodul |
| 52 | Softwaremodul |
| 53 | Sensorbus |
| 54 | Phasenselektor |
| 55 | Momentengenerator |
| 56 | Detektor |
| 57 | Untermodul von 55 |
| 58 | Untermodul von 55 |
| 59 | Phasensignal |
| 60 | Signal |
| 65 | Regler mit Rückkopplung |
| 66 | Vorsteuerung |

**Patentansprüche**

1. Verfahren zum Schalten eines Verbundgetriebes, das ein Fahren eines Fahrzeugs in mehreren Fahrbereichen ermöglicht, wobei in dem Verbundgetriebe ein mechanisches Lastschaltgetriebe (22) kombiniert ist mit einem hydrostatischen Getriebe (21) und mit einem elektronischen Steuergerät, in dem ein Steueralgorithmus zur Steuerung des Verbundgetriebes gespeichert ist,

   wobei das mechanische Lastschaltgetriebe (22) zwei Kupplungen (42, 45) und zwei Getriebezweige (40, 41), in denen jeweils eine der Kupplungen angeordnet ist, aufweist, um zwei Gangstufen zu realisieren,
   wobei das hydrostatische Getriebe (21) eine in ihrem Hubvolumen verstellbare Hydropumpe (23) und einen in seinem Hubvolumen verstellbaren Hydromotor (26) umfasst, der mit der Hydropumpe (23) in einem geschlossenen hydraulischen Kreislauf angeordnet und mit seiner Triebwelle (29) mit der Primärseite der Kupplungen verbunden ist, wobei bei einem Schaltvorgang von einer Gangstufe in die andere Gangstufe die Primärseite und die Sekundärseite der einen Kupplung voneinander gelöst und die Primärseite und die Sekundärseite der anderen Kupplung kraftschlüssig miteinander gekoppelt werden,
   **dadurch gekennzeichnet, dass** bei dem Schaltvorgang das Abtriebsmoment des Hydromotors (26) und das maximale von den Kupplungen (42, 45) übertragbare Moment durch den Steueralgorithmus derart gesteuert werden, dass Zugkraftschwankungen weitgehend vermieden werden.

2. Verfahren nach Patentanspruch 1, wobei zu Beginn eines Schaltvorgangs die Primärseite der Kupplungen (42, 45) vom Hydromotor (26) auf eine Drehzahl gebracht werden, die höher ist als die Drehzahl der Sekundärseiten der Kupplungen (42, 45).

3. Verfahren nach Patentanspruch 2, wobei gilt, dass der Betrag der Schlupfbeschleunigung als Differenz zwischen der Winkelbeschleunigung einer Primärseite minus der Winkelbeschleunigung einer Sekundärseite größer 0 ist.

4. Verfahren nach Patentanspruch 2 oder 3, wobei bei dem Schaltvorgang die Kupplungen (42, 45) so gesteuert werden, dass sich das gewünschte Zielmoment am Ausgang des mechanischen Getriebes (22) aus dem von jeder Kupplung übertragenen Moment und den Übersetzungen in den beiden Getriebezweigen (40, 41) ergibt.

**5.** Verfahren nach Patentanspruch 4, wobei das Motormoment des Hydromotors als Summe aus den von den beiden Kupplungen (42, 45) übertragenen Momenten und aus dem Produkt des Trägheitsmoments und der Winkelbeschleunigung des Hydromotors (26) ermittelt wird.

**6.** Verfahren nach einem vorhergehenden Patentanspruch, wobei während des Schaltvorgangs eine bestimmte Höhe des von einer Kupplung (42) übertragbaren Moments ein Signal für den Übergang zwischen einer Momentenphase und einer der Momentenphase folgenden Trägheitsphase darstellt, wobei in der Momentenphase die Primärseite der Kupplungen (42, 45) vom Hydromotor (26) auf eine Drehzahl gebracht werden, die höher ist als die Drehzahl der Sekundärseiten der Kupplungen, und wobei in der Trägheitsphase die Drehzahl des Hydromotors (26) auf eine Drehzahl korrespondierend zur neuen Gangstufe vermindert wird.

**7.** Verfahren nach Patentanspruch 6, wobei in der Trägheitsphase die Verringerung des Schlupfes mit der Zeit an der zu schließenden Kupplung (45) durch das Abtriebsmoment des Hydromotors (26) gesteuert wird.

**8.** Verfahren nach Patentanspruch 7, wobei in einem ersten Teil der Trägheitsphase die Veränderung des Schlupfes mit der Zeit hoch und nahezu konstant ist, um ein schnelles Schließen der Kupplung zu erhalten, und wobei in einem zweiten Teil der Trägheitsphase die Veränderung des Schlupfes mit der Zeit auf kleinere Werte gesteuert wird, um einen hohen Fahrkomfort zu erhalten.

**9.** Verfahren nach Anspruch 8, wobei der Steueralgorithmus ein als Phasenauswähler arbeitendes Modul, das anhand einer Eingabe zum Wechsel der Gangstufe, dem Schlupf an den Kupplungen, der Schlupfbeschleunigung und dem Kupplungsmoment ein die Phase und Teilphase angebendes Signal ausgibt, und ein als Momentengenerator arbeitendes Modul aufweist, das Signale für die Soll-Momente ausgibt, die am Hydromotor und an den Kupplungen eingestellt werden sollen.

**10.** Verfahren nach Patentanspruch 9, wobei der Momentengenerator einen Kupplungsmomentengenerator, dem ein gewünschtes Fahrmoment und das Signal für die Phase zugeführt wird und der die Soll-Momente für die beiden Kupplungen (42, 45) ausgibt, und einen Hydromotormomentengenerator (58) umfasst, dem die Soll-Momente für die beiden Kupplungen (42, 45) und das Signal für die Phase zugeführt werden und der diese Signale benutzt, um ein Soll-Moment für den Hydromotor (26) vorzugeben.

**11.** Verfahren nach Patentanspruch 10, wobei dem Hydromotormomentengenerator (58) zur Generierung des Soll-Moments für den Hydromotor (26) zusätzlich die aktuellen Momente an den Kupplungen (42, 45) und am Hydromotor (26), die Winkelgeschwindigkeit und Winkelbeschleunigung der Sekundärseiten der Kupplungen (42, 45) und der Schlupf zugeführt werden.

**Claims**

**1.** Method for changing gear in a compound transmission, which permits driving of a vehicle in a plurality of operating ranges, wherein, in the compound transmission, a mechanical powershift transmission (22) is combined with a hydrostatic transmission (21) and with an electronic control device in which a control algorithm for controlling the compound transmission is stored,

wherein the mechanical powershift transmission (22) has two clutches (42, 45) and two transmission branches (40, 41), in each of which one of the clutches is arranged, in order to realize two gear steps, wherein the hydrostatic transmission (21) comprises a hydraulic pump (23), the swept volume of which is adjustable, and a hydraulic motor (26), the swept volume of which is adjustable and which is arranged with the hydraulic pump (23) in a closed hydraulic circuit and is connected by its drive shaft (29) to the primary side of the clutches, wherein, during a gear-changing operation from one gear step into the other gear step, the primary side and the secondary side of the one clutch are released from each other and the primary side and the secondary side of the other clutch are coupled non-positively to each other,

**characterized in that**, during the gear-changing operation, the output torque of the hydraulic motor (26) and the maximum torque which can be transmitted by the clutches (42, 45) are controlled by the control algorithm in such a manner that tensile force fluctuations are substantially avoided.

**2.** Method according to Claim 1, wherein, at the beginning of a gear-changing operation, the primary sides of the clutches (42, 45) are brought by the hydraulic motor (26) to a rotational speed which is higher than the rotational speed of the secondary sides of the clutches (42, 45).

**3.** Method according to Claim 2, wherein the value of the slip acceleration as the difference between the angular acceleration of a primary side minus the angular acceleration of a secondary side is greater than 0.

**4.** Method according to Claim 2 or 3, wherein, during the gear-changing operation, the clutches (42, 45) are controlled in such a manner that the desired target torque at the output of the mechanical transmission (22) results from the torque transmitted by each clutch and the transmission ratios in the two transmission branches (40, 41).

**5.** Method according to Claim 4, wherein the motor torque of the hydraulic motor is determined as a sum from the torques transmitted by the two clutches (42, 45) and from the product of the moment of inertia and the angular acceleration of the hydraulic motor (26).

**6.** Method according to a preceding claim, wherein, during the gear-changing operation, a certain level of the torque which can be transmitted by a clutch (42) constitutes a signal for the transition between a torque phase and an inertia phase following the torque phase, wherein, in the torque phase, the primary sides of the clutches (42, 45) are brought by the hydraulic motor (26) to a rotational speed which is higher than the rotational speed of the secondary sides of the clutches, and wherein, in the inertia phase, the rotational speed of the hydraulic motor (26) is reduced to a rotational speed corresponding to the new gear step.

**7.** Method according to Claim 6, wherein, in the inertia phase, the reduction in the slip over time at the clutch (45) to be closed is controlled by the output torque of the hydraulic motor (26).

**8.** Method according to Claim 7, wherein, in a first part of the inertia phase, the change in the slip over time is high and virtually constant in order to obtain rapid closing of the clutch, and wherein, in a second part of the inertia phase, the change in the slip over time is controlled to smaller values in order to obtain a high level of driving comfort.

**9.** Method according to Claim 8, wherein the control algorithm comprises a module which operates as a phase selector and, on the basis of an input for changing the gear step, the slip at the clutches, the slip acceleration and the clutch torque, outputs a signal indicating the phase and partial phase, and a module which operates as a torque generator and output signals for the desired torques which are intended to be set at the hydraulic motor and the clutches.

**10.** Method according to Claim 9, wherein the torque generator comprises a clutch torque generator, to which a desired driving torque and the signal for the phase are supplied and which outputs the desired torques for the two clutches (42, 45), and a hydraulic motor torque generator (58), to which the desired torques for the two clutches (42, 45) and the signal for the phase are supplied and which uses these signals in order to predetermine a desired torque for the hydraulic motor (26) .

**11.** Method according to Claim 10, wherein the current torques at the clutches (42, 45) and at the hydraulic motor (26), the angular speed and angular acceleration of the secondary sides of the clutches (42, 45) and the slip are additionally supplied to the hydraulic motor torque generator (58) for generating the desired torque for the hydraulic motor (26).

**Revendications**

**1.** Procédé de commutation d'une transmission composite permettant à un véhicule de rouler dans plusieurs plages de conduite ; dans la transmission composite, une transmission mécanique commandée en charge (22) étant combinée à une transmission hydrostatique (21) et à un appareil de commande électronique dans lequel est stocké un algorithme de commande pour commander la transmission composite,

la transmission mécanique commandée en charge (22) présentant deux embrayages (42, 45) et deux branches de transmission (40, 41) dans chacune desquelles est agencé l'un des embrayages, afin de réaliser deux rapports de vitesse,
la transmission hydrostatique (21) comprenant une pompe hydraulique (23) dont le volume de course est réglable et un moteur hydraulique (26) dont le volume de course est réglable, qui est agencé avec la pompe hydraulique (23) dans un circuit hydraulique fermé et qui est relié par son arbre moteur (29) au côté primaire des embrayages, le côté primaire et le côté secondaire d'un embrayage étant détachés l'un de l'autre et le côté primaire et le côté secondaire de l'autre embrayage étant couplés l'un à l'autre par adhérence lors d'une opération de commutation d'un rapport de vitesse à l'autre rapport de vitesse,

**caractérisé en ce que**, lors de l'opération de commutation, le couple de sortie du moteur hydraulique (26) et le couple maximal transmissible par les embrayages (42, 45) sont commandés par l'algorithme de commande de telle sorte que les variations de force de traction sont largement évitées.

2. Procédé selon la revendication 1, dans lequel, au début d'une opération de commutation, le côté primaire des embrayages (42, 45) est amené par le moteur hydraulique (26) à une vitesse de rotation qui est supérieure à la vitesse de rotation des côtés secondaires des embrayages (42, 45).

3. Procédé selon la revendication 2, dans lequel la valeur de l'accélération de glissement en tant que différence entre l'accélération angulaire d'un côté primaire moins l'accélération angulaire d'un côté secondaire est supérieure à 0.

4. Procédé selon la revendication 2 ou 3, dans lequel, lors de l'opération de commutation, les embrayages (42, 45) sont commandés de telle sorte que le couple cible souhaité à la sortie de la transmission mécanique (22) résulte du couple transmis par chaque embrayage et des rapports de transmission dans les deux branches de transmission (40, 41).

5. Procédé selon la revendication 4, dans lequel le couple moteur du moteur hydraulique est déterminé en tant que somme des couples transmis par les deux embrayages (42, 45) et du produit du moment d'inertie et de l'accélération angulaire du moteur hydraulique (26).

6. Procédé selon une revendication précédente, dans lequel, pendant l'opération de commutation, une valeur déterminée du couple transmissible par un embrayage (42) constitue un signal pour la transition entre une phase de couple et une phase d'inertie suivant la phase de couple, dans lequel, pendant la phase de couple, le côté primaire des embrayages (42, 45) est amené par le moteur hydraulique (26) à une vitesse de rotation qui est supérieure à la vitesse de rotation des côtés secondaires des embrayages, et dans lequel, pendant la phase d'inertie, la vitesse de rotation du moteur hydraulique (26) est réduite à une vitesse de rotation correspondant au nouveau rapport de vitesse.

7. Procédé selon la revendication 6, dans lequel, dans la phase d'inertie, la réduction du glissement avec le temps sur l'embrayage (45) à fermer est commandée par le couple de sortie du moteur hydraulique (26).

8. Procédé selon la revendication 7, dans lequel, dans une première partie de la phase d'inertie, la variation du glissement dans le temps est élevée et presque constante afin d'obtenir une fermeture rapide de l'embrayage, et dans lequel, dans une deuxième partie de la phase d'inertie, la variation du glissement dans le temps est commandée à des valeurs plus faibles afin d'obtenir un confort de conduite élevé.

9. Procédé selon la revendication 8, dans lequel l'algorithme de commande présente un module fonctionnant en tant que sélecteur de phase qui émet un signal indiquant la phase et la sous-phase à partir d'une entrée pour le changement du rapport de vitesse, le glissement sur les embrayages, l'accélération de glissement et le couple d'embrayage, et un module fonctionnant en tant que générateur de couple qui émet des signaux pour les couples de consigne à régler sur le moteur hydraulique et sur les embrayages.

10. Procédé selon la revendication 9, dans lequel le générateur de couple comprend un générateur de couple d'embrayage auquel sont amenés un couple de conduite souhaité et le signal pour la phase et qui émet les couples de consigne pour les deux embrayages (42, 45), et un générateur de couple de moteur hydraulique (58) auquel sont amenés les couples de consigne pour les deux embrayages (42, 45) et le signal pour la phase et qui utilise ces signaux pour donner un couple de consigne pour le moteur hydraulique (26).

11. Procédé selon la revendication 10, dans lequel les couples actuels sur les embrayages (42, 45) et sur le moteur hydraulique (26), la vitesse angulaire et l'accélération angulaire des côtés secondaires des embrayages (42, 45) et le glissement sont en outre amenés au générateur de couple de moteur hydraulique (58) pour générer le couple de consigne pour le moteur hydraulique (26) .

Fig. 1

Fig. 2

Vergleich des Fahrmoments

Fig. 3

Fig. 4

Fig. 5

Fig. 6

54

| Fahrerwunsch | gewählter Gang |
|---|---|

56

Gangänderungs-detektor | Reset

53

Sensorbus

Schlupfgeschwindigkeit

Schlupfbeschleunigung

Kupplungsmoment

Phasenselektor

Phasensignal

# Fig. 7

60    57    55

Zielfahrmoment

Kupplungsmoment-generator

Inverse Aktuator-dynamik

Tc1'

Tc2'

Phase

58

Momentengenerator für Hydromotor

Inverse Aktuator-dynamik

Tm'

Tc1,Tc2,Tm

Geschwindigkeit und Beschleunigung

Sensorbus

Schlupfgeschwindigkeit

53

# Fig. 8

EP 3 882 487 B1

# Fig. 9

# Fig. 10

Fig. 11

gemessene
Variablen

Vorsteuerung

66

58

Regler

65

22

Getriebe

ω_s

72

71

70

73

74

Zeit [s]

Fig. 12

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3128108 C2
- DE 2237595 B
- DE 3807599 C2
- DE 3128108
- DE 4340126 A1